(19) Europäisches Patentamt
European Patent Office
Office européen des brevets

(11) Publication number: 0 369 612 A1

# (12) EUROPEAN PATENT APPLICATION

(21) Application number: 89310769.8

(51) Int. Cl.[5]: A01N 47/18, A01N 25/14

(22) Date of filing: 19.10.89

(30) Priority: 18.11.88 GB 8827031

(43) Date of publication of application:
23.05.90 Bulletin 90/21

(84) Designated Contracting States:
AT BE CH DE ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Brown, David Joseph
56 Ralphs Ride
Bracknell(GB)
Inventor: Marrs, Gordon James
South Riding Belmont Park Road
Maidenhead Berkshire(GB)

(74) Representative: Bishop, Nigel Douglas et al
Imperial Chemical Industries PLC Legal Department: Patents PO Box 6 Bessemer Road
Welwyn Garden City Herts, AL7 1HD(GB)

## (54) Insecticidal compositions.

(57) The invention provides an aphicidal composition suitable for use as a concentrate for the preparation of a foliar spray, characterised in that the composition is a slow-release wettable powder or water dispersible grain comprising, as active ingredient, an aphicide selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, and an additive selected from a thermoplastic resin and a wax. The invention also provides processes for the preparation of the compositions and a method for their use in preventing or combating aphid infestations of plants.

EP 0 369 612 A1

## INSECTICIDAL COMPOSITIONS

This application relates to insecticidal compositions containing pirimicarb, suitable for use as concentrates for the preparation of aqueous sprays for foliar application, leading to improved persistence of pirimicarb on target crops.

UK Patent Specification No. 1,181,657 describes pyrimidine derivatives having selective aphicidal activity. One particular compound according to the disclosure of UK 1,181,657 has the chemical structure:

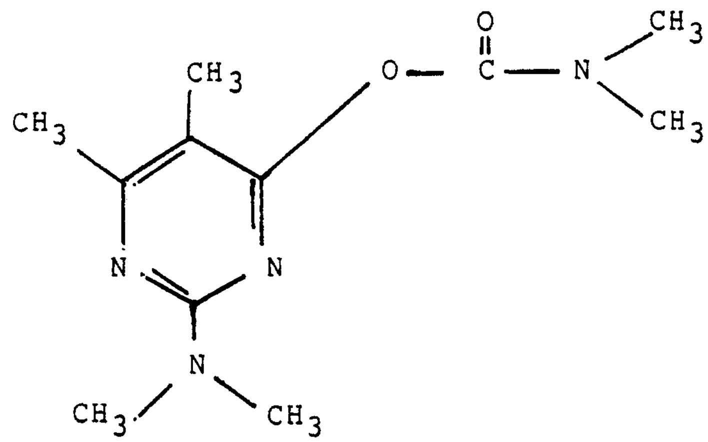

and is known by the common name pirimicarb.

Pirimicarb is a fast acting, carbamate aphicide which exhibits a rapid initial knockdown effect by fumigant action, and is widely used for the effective control of aphids in cereal and vegetable crops, sugar beet and top fruit. Pirimicarb provides rapid control of aphid pests, resulting in a quick clean-up of infestations and preventing the transmission of aphid-borne viral diseases of the target crop. Pirimicarb is traditionally supplied in the form of a concentrate suitable for dilution in water and application as a foliar spray. Any of the formulations under the heading "Concentrates for Dilution in Water" in the GIFAP Catalogue of Pesticide Formulation Types and International Coding System are suitable for foliar application of pirimicarb in this way. Examples of compositions which have proved effective include solid compositions such as wettable powders (WP) and water dispersible grains (WG), and liquid compositions such as emulsifiable concentrates (EC), suspension concentrates (SC) and capsule suspensions (CS).

Although the rapid control of aphid pests provided by these traditional compositions is satisfactory in most circumstances, the low persistence of the compound at the target crop resulting from traditional formulation types can lead to the possibility or re-infestation, resulting in the need for further applications to provide continued control.

We have now developed slow-release wettable powder and water dispersible grain compositions of pirimicarb, suitable for use as concentrates for the preparation of aqueous foliar sprays, containing additives which lead to greater persistence of the compound on the target crop, thereby preventing reinfestation of aphid pests, but which, surprisingly, retain the rapid initial knockdown and control observed with traditional compositions.

Accordingly, there is provided an aphicidal composition suitable for use as a concentrate for the preparation of a foliar spray, characterised in that the composition is a slow-release wettable powder or water dispersible grain comprising pirmicarb as active ingredient and an additive selected from a thermoplastic resin and a wax.

The slow-release compositions according to the present invention are toxic to and may be used in the control of aphid pests associated with agriculture or horticulture. They are of particular use for the control of aphid pests of cotton, cereal crops, vegetable crops, sugar beet and top fruit, for example Aphis gossypii, Sitobion avenae, Myzus persicae, Aphis fabae and Eriosoma lanigerum. They are also of particular use in preventing aphid-borne virus transmission, for example yellowing viruses of sugar beet, barley yellow dwarf virus of cereals and potato leaf roll virus of potatoes. In use, the compositions are diluted with water to form aqueous preparations which remain homogeneous for a sufficient time to enable them to be applied by conventional spray equipment to the pests, to the locus of the pest, to the habitat of the pests or to growing plants infested with or liable to infestation by the pests or to the medium in which the plants are growing.

The compositions may contain from 5% to 85% by weight of pirimicarb, preferably 50%, and when diluted to form aqueous preparations, such preparations may contain varying amounts of the active ingredient depending on the purpose for which they are to be used. For agricultural and horticultural purposes, an aqueous preparation containing between 0.0001% and 0.1% of pirimicarb is particularly useful.

The compositions according to the invention are also suitable for admixture or tank mixture with one or more compositions containing additional active ingredients at the time of preparing an aqueous spray for foliar application. Suitable active ingredients for such admixture include alternative insecticides, insecticide synergists, herbicides, fungicides and plant growth regulators.

The compositions according to the invention may be prepared by mixing pirimicarb with a molten thermoplastic resin or wax. After cooling and grinding the solidified mixture, a wettable powder (WP) composition may be prepared by the addition of suitable diluents, dispersing agents and other additives using techniques and materials which are generally known in the formulation art, optionally followed by further grinding. Examples of thermoplastic resins include hydrocarbon resins such as polypentene (for example an aliphatic petroleum hydrocarbon resin such as Imprez) and polyamide resins (for example Evacor). Examples of waxes include chlorinated waxes (for example a chlorinated paraffinic hydrocarbon, such as Cereclor) and natural waxes such as shellac or beeswax. Imprez, Evacor and Cereclor are registered trade marks. Examples of compositions of slow-release wettable powders according to the invention are given in Example 1 and 2.

| EXAMPLE 1 | |
|---|---|
| Slow-release WP | |
| Ingredient | % by weight |
| Pirimicarb | 25 |
| Cereclor 70 | 25 |
| Lignosulphonate dispersing agent | 5 |
| Sodium lauryl sulphate | 2.5 |
| Light magnesium carbonate | 20 |
| Kaolinite powder | to 100% |

| EXAMPLE 2 | |
|---|---|
| Slow release WP | |
| Ingredient | % by weight |
| Pirmicarb | 10 |
| Cereclor 70 | 40 |
| Lignosulphonate dispersing agent | 5 |
| Sodium lauryl sulphate | 2.5 |
| Kaolinite powder | to 100% |

Water dispersible grain compositions according to the invention may be prepared from powdered mixtures of pirimicarb and either resin or wax, using standard techniques such as agglomeration or extrusion.

Application of pirimicarb in the form of aqueous foliar sprays derived from the compositions according to the invention has been shown to lead to increased persistence compared with traditional compositions. This is illustrated in the following Examples.

EXAMPLE 3

Chemical Persistence Measurements

Field persistence of pirimicarb applied both as a composition according to the invention and as a standard composition was measured by the determination of half-life of pirimicarb after spray application. The compositions were diluted in water and sprayed onto filter paper using a track sprayer. The papers were allowed to air dry, and a sample taken for analysis of the initial pirimicarb deposit. The papers were then pinned to a board and placed in an external location open to the air. Samples of the papers were removed from the board at daily intervals and analysed for pirimicarb residues. The results of these analyses are given in Table I, and were used to calculate the half-life of pirimicarb for each composition.

The half-life of the composition of Example 1 (slow-release wettable powder) in this test was found to be 4.7 days, compared with a half-life of 2.4 days found for the standard water dispersible grain composition.

TABLE I

| Persistence of Composition of Example 1 (slow-release WP) | | |
|---|---|---|
| TIME | PIRIMICARB DEPOSIT | CALCULATED HALF-LIFE |
| (days) | (μg) | (days) |
| 0 | 53.8 | |
| 1 | 50.1 | |
| 2 | 40.3 | |
| 4 | 30.7 | 4.7 |
| Persistence of Standard Composition (50% WG) * | | |
| TIME | PIRIMICARB DEPOSIT | CALCULATED HALF-LIFE |
| (days) | (μg) | (days) |
| 0 | 96.3 | |
| 1 | 72.1 | |
| 2 | 68.3 | |
| 4 | 29.9 | 2.4 |

* Standard WG formulation sold under the trade name "Aphox"

EXAMPLE 4

Assessment of Biological Activity and Persistence

In a greenhouse test, sugar beet plants were sprayed with diluted compositions according to the invention and with diluted standard compositions and then infested with Myzus persicae, in order to assess the toxicity of deposited pirimicarb both initially and after ageing. The results given in Table II demonstrate that the slow-release wettable powder composition of Example 1 not only gives longer persistence and control than the standard wettable powder composition, but also, unexpectedly, gives equivalent initial control.

TABLE II

| Composition | Application Rate (ppm pirimicarb in spray) | % Mortality of M Persicae Adults | |
|---|---|---|---|
| | | Initial | 3 DAT |
| Composition of Example 1 | 156 | 100 | 85 |
| Standard * Composition (50% WG) | 156 | 100 | 11 |

* Standard WG formulation sold under the trade name "Aphox"

EXAMPLE 5

Determination of half-life of pirmicarb formulations by Accelerated Chemical Persistence measurement.

Field persistence of pirmicarb applied both as compositions according to the invention and as standard compositions was measured by the determination of half-life using a laboratory accelerated technique. The compositions were diluted in water and sprayed onto glass slides using a track sprayer. The slides were allowed to air dry and a sample taken for analysis to determine the level of the initial pirmicarb deposit. The remaining slides were placed on a cooled tray fitted to a Hereaus Suntest apparatus and subjected to the effect of a wind tunnel and constant artifcial sunlight (xenon arc lamp). The slides were removed at intervals over a three day period and analysed for pirmicarb residue. The results were used to determine values of half-life.

The half-life of the composition described in Example 2 was found to by this method to be 14 hours, compared with a half-life of 4 hours found for the standard 50% water dispersible grain composition of pirmicarb sold under the trade name of "Aphox".

The compositions described herein for improving the persistence of pirimcarb are also suitable for improving the persistence of other aphicides known in the art, and similarly lead to greater persistence of the aphicide, thereby preventing re-infestation by aphid pests but, surprisingly, with retention of the rapid initial knockdown and control observed with the traditional compositions. Accordingly, in a further aspect, the invention also provides an aphicidal composition suitable for use as a concentrate for the preparation of a foliar spray, characterised in that the composition is a slow-release wettable powder or water dispersible grain comprising, as active ingredient, an aphicide selected from the group of aphicides consisting of dimethoate, demeton-S-methyl, heptenophos, 1-(dimethylcarbamoyl)-3-t-butyl-5-carboethoxymethylthio-1H-1,2,4-triazole, acephate, tefluthrin, chlorpyrifos, monocrotophos, fenitrothion, methomyl, oxydemeton-methyl, omethoate, pirimiphosmethyl, pirimiphos-ethyl, triazophos, profenofos, permethrin, cypermethrin, lambda-cyhalothrin, menazon and phosalone, and an additive selected from a thermoplastic resin and a wax.

## Claims

1. An aphicidal composition suitable for use as a concentrate for the preparation of a foliar spray, characterised in that the composition is a slow-release wettable powder or water dispersible grain comprising pirimicarb as active ingredient and an additive selected from a thermoplastic resin and a wax.

2. An aphicidal composition suitable for use as a concentrate for the preparation of a foliar spray, characterised in that the composition is a slow-release wettable powder or water dispersible grain comprising, as active ingredient, an aphicide selected from the group of aphicides consisting of dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, and an additive selected from a thermoplastic resin and a wax.

3. An aphicidal composition as claimed in claim 1 or claim 2 wherein the thermoplastic resin is a

hydrocarbon resin.

4. An aphicidal composition as claimed in claim 1 or claim 2 wherein the thermoplastic resin is a polyamide resin.

5. An aphicidal composition as claimed in claim 1 or claim 2 wherein the wax is a chlorinated wax.

6. An aphicidal composition as claimed in claim 1 or claim 2 wherein the wax is a natural wax.

7. An aphicidal composition as claimed in any preceding claim containing from 5 to 85% of the active ingredient.

8. A process for the preparation of an aphicidal composition in the form of a slow-release wettable powder which comprises the step of (i) admixture of an aphicide selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, with a either a thermoplastic resin or a wax in the molten state, followed by the step of (ii) cooling the mixture to a temperature at which it is solidified, followed by the step of (iii) grinding the cooled and solidified mixture.

9. A Process for the preparation of an aphicidal composition in the form of a slow-release water dispersible grain which comprises agglomeration or extrusion of a powdered mixture of an aphicide selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, and either a thermoplastic resin or a wax.

10. A method of preventing or combating an aphid infestation of a plant which comprises application to the foliage of the plant or to the medium in which the plant is growing an insecticidally effective amount of an aqueous composition prepared by aqueous dilution of an aphicidal composition as claimed in any one of claims 1 to 7.

European Patent Office

# EUROPEAN SEARCH REPORT

Application Number

EP 89 31 0769

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PESTICIDE SCIENCE, vol. 3, no. 6, 1972, pages 799-804, Elsevier Applied Science Publisher, Barking, GB; D. SEAMAN et al.: "Slow Release Pirimicarb Granular Formulations: Measurements of Release Rate under Field Conditions" * Pages 799-800, chapters 2.1,2.2 * | 1,3,6-10 | A 01 N 47/18<br>A 01 N 25/14 |
| X<br>Y | EP-A-0 237 227 (IMERIAL CHEMICAL IND.) * Page 1, lines 1-8; page 4, lines 16-31; page 6, lines 7-11; example 1b * | 1-3,6-10<br>5 | |
| Y | GB-A- 847 408 (IMPERIAL CHEMICAL IND.) * Page 1, lines 45-58; page 2, lines 36-50; page 4, lines 56-75 * | 5 | |
| X | DE-A-1 936 748 (CIBA AG) * Page 1, lines 1-3; page 7, last paragraph - page 8, paragraph 1; page 9 - page 11, paragraph 1; page 16, paragraph 6 - page 18, line 2; page 22, line 6; page 24, lines 8,9; pages 28,29; page 32, line 1; page 44; claims 1-4,8,13,14 * | 1-4,7-10 | **TECHNICAL FIELDS SEARCHED (Int. Cl.5)**<br>A 01 N |
| X | FR-A-2 100 849 (FISONS LTD) * Claims 1-7,11 * | 2,3,6,10 | |
| X | EP-A-0 021 477 (SHELL INTERNATIONALE RESEARCH MAATSCHAPPIJ B.V.) * Example 1a; claims 1-4,11-13 * | 2,3,10 | |

The present search report has been drawn up for all claims

| Place of search | Date of completion of the search | Examiner |
|---|---|---|
| THE HAGUE | 22-02-1990 | MUELLNERS W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document